Europäisches Patentamt

European Patent Office

Office européen des brevets

(11) Veröffentlichungsnummer: **0 173 670**
A2

## (12) EUROPÄISCHE PATENTANMELDUNG

(21) Anmeldenummer: 85890161.4

(22) Anmeldetag: **19.07.85**

(51) Int. Cl.⁴: **B 60 C 5/00,** B 60 C 3/00

(30) Priorität: **23.08.84 AT 2700/84**

(43) Veröffentlichungstag der Anmeldung: **05.03.86**
**Patentblatt 86/10**

(84) Benannte Vertragsstaaten: **AT CH DE FR IT LI LU**

(71) Anmelder: **Semperit Aktiengesellschaft,**
**Modecenterstrasse 22, A-1031 Wien (AT)**

(72) Erfinder: **Stumpf, Horst, Dipl.-Ing., Josefsplatz 1,**
**A-2500 Baden (AT)**

(54) **Fahrzeugluftreifen.**

(57)  Im Innenraum des Fahrzeugreifens gemäss der Erfindung ist ein gegenüber dem umgebenden Luftdruck geringerer Innendruck erstellbar. Der Reifen (4) selbst wird bereits als Rohreifen gemäss einer dem Betrieb mit Unterdruck entsprechenden Gleichgewichtsgestalt geformt, so dass bei Betrieb mit Unterdruck in den Hauptspannungsrichtungen im wesentlichen nur Druckspannungen auftreten.

EP 0 173 670 A2

ACTORUM AG

Fahrzeugluftreifen

Die Erfindung betrifft einen Fahrzeugluftreifen aus einem
im wesentlichen inkompressiblen elastomeren Material, in
dessen Innenraum ein gegenüber dem umgebenden Luftdruck
geringerer Innendruck erstellbar ist.

Ein derartiger Fahrzeugluftreifen ist aus der DE-OS 32 45 783
bekannt. Bei der Herstellung erhält dieser bekannte Reifen
Seitenwände, die im wesentlichen gerade verlaufen, bzw.
in Seitenansicht des Reifens nach Art einer ebenen Kreisringscheibe geformt sind. Beim Erzeugen des Unterdruckes
im Reifeninnenraum erfolgt ein nach innen (in Richtung auf
den Reifenhohlraum) Verbiegen bzw. Verformen der Reifenseitenwände. Durch Verändern des Unterdruckes wirkt der
atmosphärische Außendruck mehr oder weniger stark auf die
Reifenseitenwände, wodurch diese mehr oder weniger stark
nach innen durchgewölbt werden. Auf diese Weise soll unmittelbar auf die Federungseigenschaften des Reifens eingewirkt werden. Dieser bekannte Reifen ändert aber beim
Erzeugen des Unterdruckes im Reifeninnenraum wesentlich
seine Form, wodurch zusätzlich zu Druckspannungen auch
Biegespannungen im Reifenkörper entstehen. Im Betrieb
sind daher bei diesem Reifen durch die insbesondere in den
Reifenseitenwänden auftretenden Biegespannungen eine Reihe
von negativen Eigenschaften, wie beispielsweise relativ
hohe Wärmeentwicklung, eher schlechte Federungseigenschaften
und bei höherer Dauerbeasnpruchung eine niedrige Lebensdauer
zu erwarten.

Die Erfindung hat sich nun die Aufgabe gestellt, einen
Fahrzeugluftreifen, dessen Innenraum mit Unterdruck beaufschlagbar ist, so zu gestalten, daß ideale Federungseigenschaften und eine sehr geringe Wärmeentwicklung zu erwarten
sind.

Gelöst wird die gestellte Aufgabe erfindungsgemäß dadurch,
daß der Reifen als Rohreifen gemäß einer dem Betrieb mit

0173670

Unterdruck entsprechenden Gleichgewichtsgestalt geformt ist, sodaß bei Betrieb mit Unterdruck in den Hauptspannungsrichtungen (in radialer Richtung und in Umfangsrichtung) im wesentlichen nur Druckspannungen auftreten.

Erfindungsgemäß wird daher der Reifen schon bei der Herstellung gemäß einer Gleichgewichtsgestalt beim Betrieb mit Unterdruck geformt. Beim Evakuieren des Reifeninnenraumes erfolgt kaum noch eine Formänderung, sodaß das Auftreten von unerwünschten Biegespannungen weitgehendst vermieden ist und überwiegend nur Druckspannungen in den Hauptspannungsrichtungen entstehen. Der erfindungsgemäße Reifen ist dadurch in seinen Federungseigenschaften nahezu als ideal zu bezeichnen, im Betrieb tritt eine geringe Wärmeentwicklung auf und auch der Rollwiderstand ist sehr gering.

Um eine ausreichende Festigkeit im Bereich der Lauffläche und eine gute Seitenstabilität des Reifenkörpers zu erzielen, ist es zweckmäßig, wenn erfindungsgemäß der Reifen mit einem mindestens eine in Umfangsrichtung knickfeste und in radialer Richtung biegeweiche·Verstärkungslage aufweisenden Laufflächenteil versehen ist. Durch eine derartige Verstärkung werden außerdem in der Kontaktfläche Lauffläche/Boden geringe Scherspannungen aufgebaut und die Bodenberührungsfläche optimal groß gehalten.

Diese Verstärkungslage kann nun nach einem weiteren Merkmal der Erfindung auf besonders einfache Weise dadurch geschaffen werden, daß zumindest eine Lage von in Umfangsrichtung verlaufenden drucksteifen, gegebenenfalls spiralig gewickelten Drähten vorgesehen ist, welche vorzugsweise die oberste(n) Lage(n) der Verstärkungslage bilden.

Eine weitere Ausführungsform einer knickfesten Verstärkungslage ist erfindungsgemäß dadurch gekennzeichnet, daß zumindest eine zellförmig, insbesondere wabenförmig strukturierte Lage vorgesehen ist, welche aus offenen Zellen bzw. Waben, beispielsweise aus Kunststoff oder Metall, besteht und die gegebenenfalls beidseitig mit einer Lage aus Elastomer abgedeckt ist. Die zell- oder wabenförmige Strukturierung der Verstärkungslage gestattet es, einen knickfesten und biegsamen Laufflächenteil zu schaffen, der zu seiner Verstärkung keiner weiteren Maßnahmen bedarf.

Es gibt eine Anzahl von Möglichkeiten, diesen Reifen gemäß seiner Gleichgewichtsfigur zu gestalten. Bei einer ersten Ausführungsform ist hiezu nach einem weiteren Erfindungsgedanken vorgesehen, daß die Reifenseitenwände nach innen gekrümmt sind, und daß, im Querschnitt betrachtet, jede Seitenwand entlang einer Kurve mit einer oder zwei Wendetangenten verläuft. Diese Ausgestaltung begünstigt in besonderem Maße den Fahrkomfort des Reifens, da dadurch nahezu ideale Federungseigenschaften erzielbar sind.

Bei einer weiteren erfindungsgemäßen Ausführungsform sind die Reifenseitenwände ebenfalls nach innen gekrümmt, wobei im Querschnitt betrachtet, jede Seitenwand entlang einer wendetangentenfreien Kurve verläuft. Zusätzlich zu ausgezeichneten Federungseigenschaften bewirkt diese Ausgestaltung eine sehr gute Seitenführung bzw. Seitenstabilität des Reifens.

Eine weitere erfindungsgemäße Ausführungsform sieht vor, daß der Reifen, im Querschnitt betrachtet, elliptisch bzw. im wesentlichen elliptisch gestaltet ist, wobei eine der beiden Seitenwände mit Wulstbereichen zum Anordnen des Reifens auf der Felge versehen ist. Diese Ausführungsform gewährleistet ebenfalls ausgezeichnete Komfort bzw. Federungseigenschaften des Reifens.

Da das Auftreten von Zugspannungen in den Reifenseiten-

- 4 -

0173670

wänden weitestgehendst vermieden ist, kann der erfindungsgemäße Reifen unproblematisch auch aus einem gießbaren elastomeren Material in einem Gußverfahren hergestellt werden. Dabei können in das elastomere Material gegebenenfalls orientierte Fasern als Verstärkungselemente eingebettet sein.

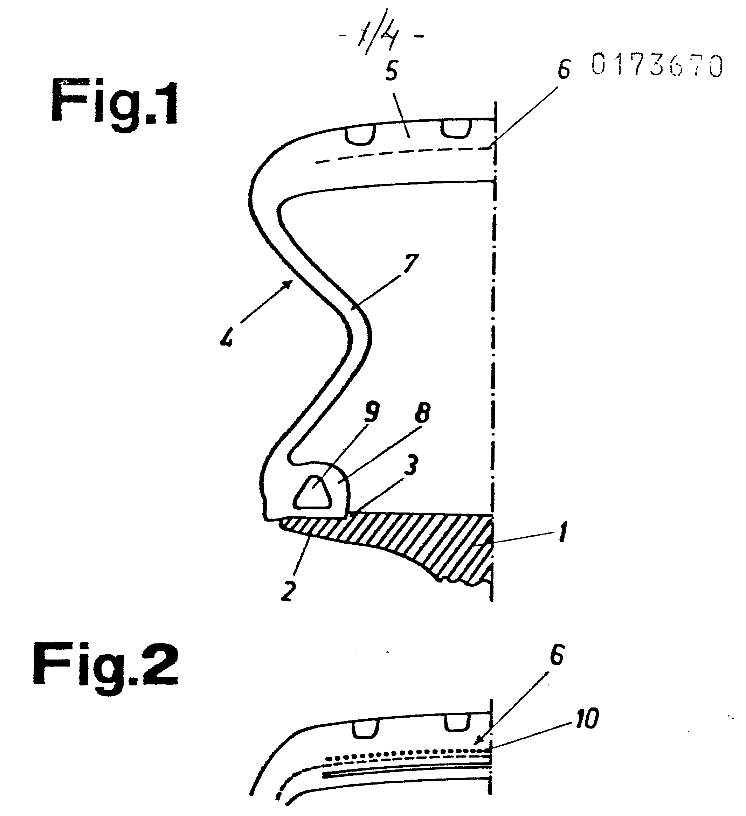

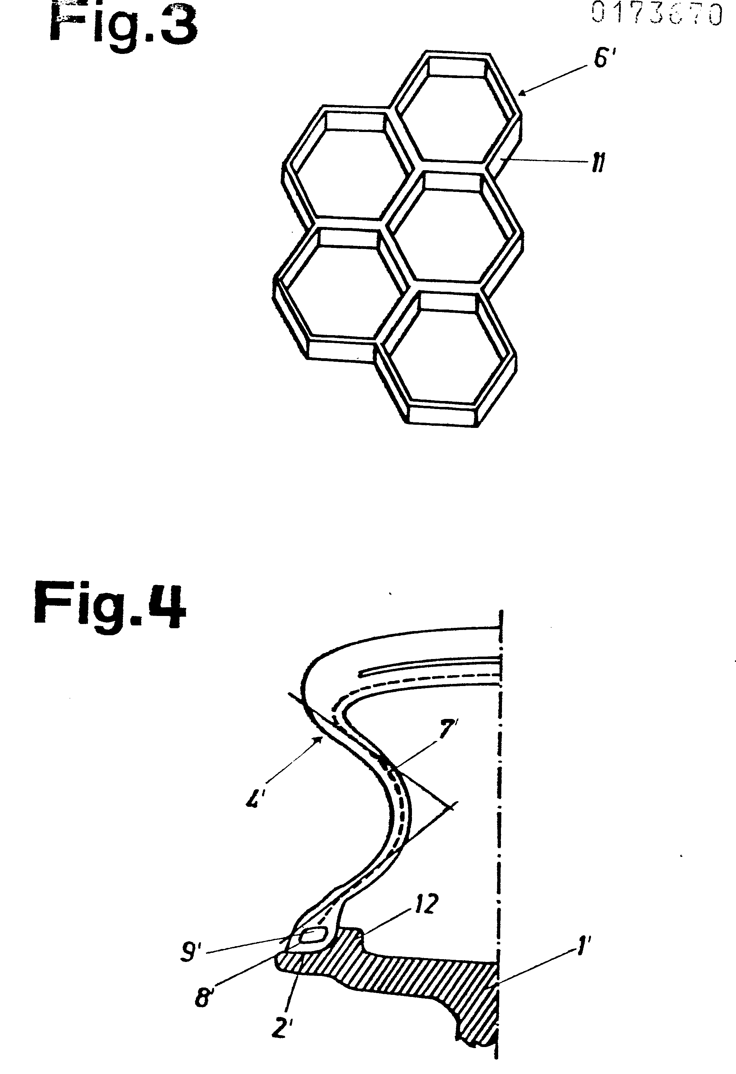

Weiter Merkmale, Vorteile und Einzelheiten der Erfindung werden nun anhand der Zeichnung, die mehrere Ausführungsbeispiele des erfindungsgemäßen Fahrzeugreifens darstellt, näher beschrieben. Hiebei zeigen: Fig. 1 einen radialen Teilschnitt durch eine erste Ausführungsform des Fahrzeugreifens, die Fig. 2 eine Lauffflächenverstärkung zur Verwendung beim erfindungsgemäßen Fahrzeugreifen in schematischer Darstellung, Fig. 3 ein Detail einer weiteren Verstärkungskonstruktion und die Fig. 4 bis 8 radiale Teilschnitte durch weitere Ausführungsformen des erfindungsgemäßen Fahrzeugreifen. Hiebei ist in den Fig. 1 und 4 bis 8 jeweils auch eine beispielhafte Anordnung des Reifens an einer Felge dargestellt.

Beim ersten Ausführungsbeispiel gemäß Fig. 1 besteht der Reifen 4 aus einer Lauffläche 5, einer noch näher zu beschreibenden Lauffflächenverstärkung 6 und Seitenwänden 7, die bei der Herstellung des Reifens entsprechend der Gleichgewichtsfigur desselben geformt sind. Hiebei ist jede Seitenwand 7 nach innen gekrümmt, der in den Wulst 8 mündende Endbereich ist ebenfalls nach innen umgeschlagen, sodaß jede Seitenwand 7, im Querschnitt betrachtet, entlang einer der Gleichgewichtsfigur entsprechenden Kurve mit zwei Wendetangenten verläuft.

Die Felge 1 ist mit Seitenteilen versehen, deren äußere Randbereiche am äußeren Umfang Sitzflächen 2 für die Wülste 8 des Reifens 4 aufweisen. Jede Sitzfläche ist radial innen von einem Anschlag 3 begrenzt.

Die in den Wülsten 8 enthaltenen Kerne 9 sind als, in Umfangsrichtung betrachtet, druckfeste und als, in radialer Richtung betrachtet, verquetschbare Kerne mit großem Durchmesser ausgebildet. Hiebei ist die Kernlänge, solange die Kerne 9 nicht verpreßt sind, über den Umfang des Reifens gesehen, etwas größer. Zur Montage des Reifens ist es leicht möglich, diesen mit noch nicht verquetschten Kernen 9 auf die Felge 1 zu ziehen. Anschließend werden die Wülste 8 mittels einer geeigneten Vorrichtung auf die Sitzflächen 2 der Felge 1 gepreßt, wobei die Kerne 9 verquetscht werden.

Die Laufflächenverstärkung 6 des Reifens 4 ist in Umfangsrichtung knickfest und in radialer Richtung biegeweich ausgeführt. Fig. 2 zeigt eine Konstruktion, bei der die Laufflächenverstärkung 6 mehrlagig ausgeführt ist, wobei die oberste Lage aus zumindest einer Lage 10 von in Umfangsrichtung verlaufenden drucksteifen Einzeldrähten besteht, deren Durchmesser relativ groß ist. Diese Lage kann auch aus einem einzigen, spiralig gewickelten Draht bestehen. Unterhalb dieser Lage 10 können beispielsweise zwei herkömmliche hochgewinkelte Lagen aus Stahlkord vorgesehen sein. Eine weitere Ausführungsform eines knickfesten Gürtels 6' ist in Fig. 3 dargestellt. Der Gürtel 6' besitzt eine wabenförmig strukturierte Verstärkungslage 11, welche beidseitig mit einer nicht dargestellten Elastomerlage abgedeckt ist. Die Lage 11 selbst besteht beispielsweise aus Kunststoff, Metall oder einer Metallegierung. Es ist auch möglich, die Hohlräume der einzelnen Waben mit einem elastomeren Material auszufüllen. Die in den Fig. 2 und 3 dargestellten Verstärkungskonstruktionen finden auch bei den noch folgenden Ausführungsbeispielen Verwendung.

Bei dem in Fig. 4 dargestellten Ausführungsbeispiel entspricht der Aufbau des Reifens 4' im wesentlichen dem des Reifens 4 des Ausführungsbeispieles gemäß Fig. 1. Der

0173670

wesentliche Unterschied zu dem in Fig. 1 dargestellten Ausführungsbeispiel besteht darin, daß die Art des Wulstsitzes des Reifens 4' im wesentlichen einer Umkehrung des konventionellen Wulstsitzes entspricht. Hiezu sind an der Felge 1' dem herkömmlichen Felgenhorn entsprechende Stützränder 12 vorgesehen, die an je eine Sitzfläche 2' für die Reifenwülste 8' anschließen, wobei sich die Sitzflächen 2' radial außerhalb der Stützränder 12 befinden. Die Wülste 8' selbst enthalten herkömmliche zugfeste Wulstkerne 9'. In Folge des im Reifenhohlraum erzeugten Unterdruckes werden die Wülste 8' an die Stützränder 12 angedrückt, wodurch eine gute Abdichtwirkung und ein fester Sitz des Reifens 4' an der Felge 1' erzielt werden. Auch bei diesem Ausführungsbeispiel verlaufen die nach innen gekrümmten Reifenseitenwände 7', entsprechend der Gleichgewichtsfigur, im Querschnitt entlang einer Kurve mit zwei Wendetangenten.

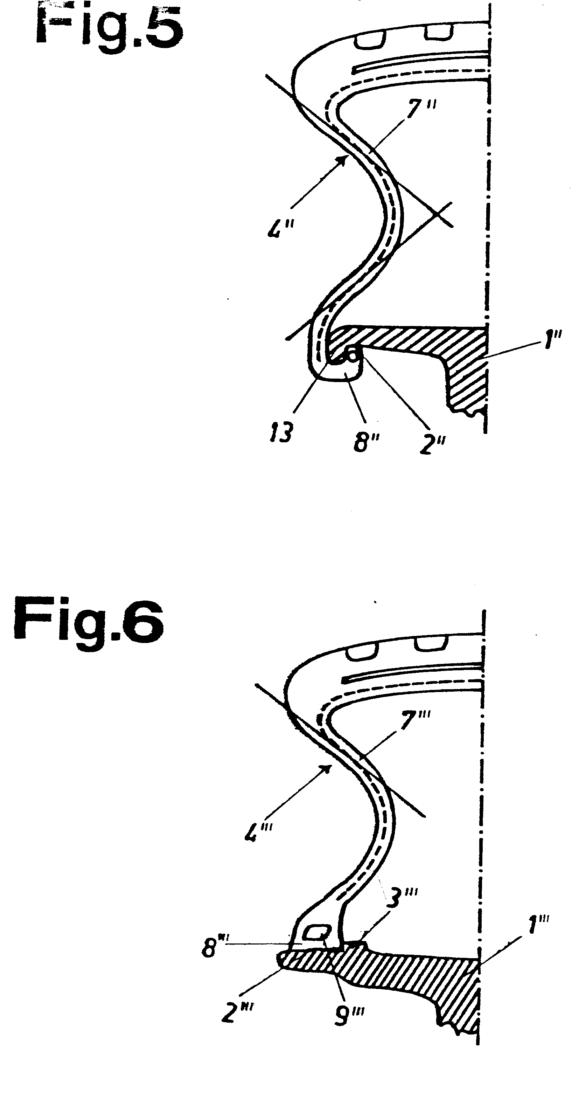

Ein weiteres Ausführungsbeispiel, bei dem die Seitenwände 7'' des Reifens 4'' ebenfalls einer Kurvenform mit zwei Wendetangenten folgen, ist in Fig. 5 dargestellt. Die Felge 1'' weist an den seitlichen Randbereichen je ein sich radial nach innen erstreckendes Felgenhorn 13 auf, an welches sich je eine Sitzfläche 2'' für die Reifenwülste 8'' anschließt, sodaß die Reifenwülste 8'' auf Sitzflächen 2'' am inneren Umfang der Felge 1'' gehalten sind. Durch den im Reifenhohlraum erzeugten Unterdruck werden wiederum die Reifenwülste 8'' an die Felgenhörner 13 angedrückt.

In Fig. 6 ist ein Ausführungsbeispiel dargestellt, bei dem die Reifenwülste 8''' wie beim Ausführungsbeispiel gemäß Fig. 1 durch Preßsitz an der Felge 1''' gehalten sind. Zu diesem Zweck sind die in den Reifenwülsten 8''' enthaltenen Wulstkerne 9''' wiederum als in Umfangsrichtung des Reifens 4''' druckfeste und als in radialer Richtung verquetschbare Wulstkerne ausgeführt. Die Felge 1''' selbst ist wiederum mit vorzugsweise geeigneten Sitzflächen 2''' und Anschlägen 3''' versehen, die eine definierte Lage der Wülste 8''' des Reifens 4''' beim Verpressen der Kerne 9''' gewährleisten. Da jede Seitenwand 7''' ohne zusätzliche Umbiegung in den Reifenwulst 8''' übergeht, folgt jede Seitenwand 7''' im Querschnitt einer Kurve mit einer Wendetangente.

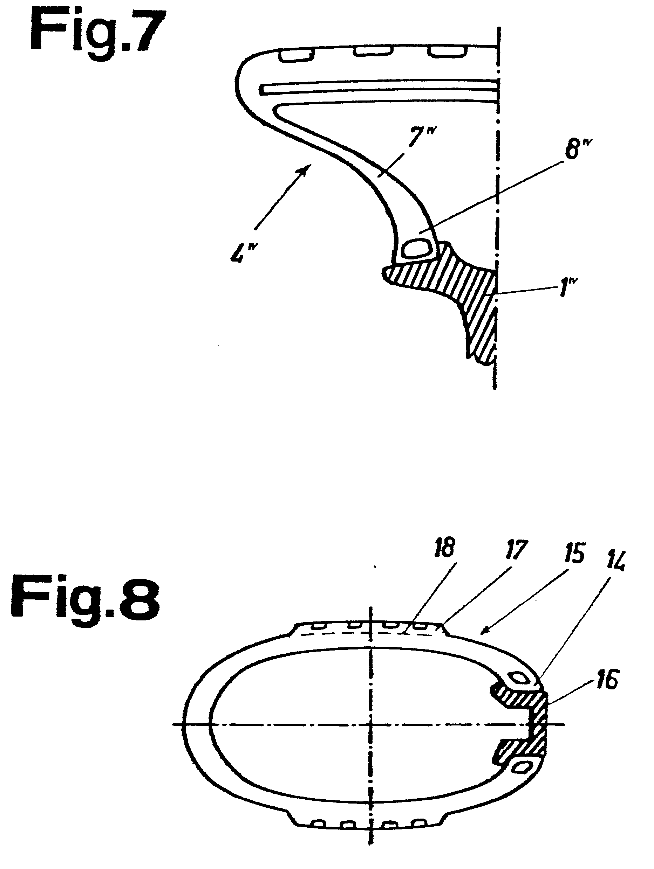

Fig. 7 zeigt ein Ausführungsbeispiel eines Reifens $4^{IV}$ für eine sehr schmal ausgeführte Felge $1^{IV}$. An der ansonsten wie beim Ausführungsbeispiel gemäß Fig. 6 ausgeführten Felge $1^{IV}$ sind die Reifenwülste $8^{IV}$ wiederum durch Preßsitz gehalten. Jede nach innen gekrümmte Seitenwand $7^{IV}$ folgt im Querschnitt einer Kurve ohne Wendetangente und endet in einem gegenüber der Felge $1^{IV}$ sehr breit ausgeführten Laufflächenteil. Durch diese erfindungsgemäße Konstruktion wird ein Reifen mit extrem niedrigem Querschnitt geschaffen.

Fig. 8 zeigt ein Ausführungsbeispiel, bei dem der Reifen 15 im Querschnitt betrachtet, elliptisch bzw. etwa elliptisch gestaltet ist. Die Wulstbereiche 14 zum Befestigen des Reifens 15 an der Felge 16 sind an einer der beiden Schmalseiten des Reifens 15 vorgesehen. An der Felge 16 selbst ist der Reifen 15 entweder auf herkömmliche Weise oder auch durch Preßsitz gehalten. Um den elliptischen Reifenkörper umlaufend ist wiederum unterhalb der Lauffläche 17 eine in Umfangsrichtung knickfeste und in radialer Richtung biegeweiche Verstärkung 18 vorgesehen, die gemäß den Zeichnungsfiguren 2 und 3 aufgebaut sein kann.

Bei allen Ausführungsbeispielen ist es möglich, den Reifen durch andere bekannte Maßnahmen an der Felge zu halten bzw. die dargestellten Ausführungen untereinander zu kombinieren. In den Zeichnungsfiguren sind besonders vorteilhafte bzw. besonders geeignete Maßnahmen zur Anordnung an der Felge dargestellt. Weiters kann der Reifenkörper zusätzlich mit einer Karkasse verstärkt werden, doch ist diese Maßnahme , da in den Reifenseitenwänden im wesentlichen nur Druckspannungen auftreten, nicht unbedingt erforderlich.

Zum Erzeugen des Unterdruckes im Reifenhohlraum ist jeweils an der Felge ein nicht dargestellter ventilartiger Anschluß vorgesehen. Beim Aufbringen des Unterdruckes erfolgt bei den Ausführungsbeispielen gemäß Fig. 1 und Fig. 4 bis 7 eine kaum merkliche Verstärkung der Krümmung der Reifenseitenwände, wogegen beim Ausführungsbeispiel gemäß Fig. 8 keinerlei Formänderung stattfindet. Da dadurch, wie schon eingangs ausführlich dargelegt, im wesentlichen nur Spannungen in den Hauptspannungsrichtungen (in radialer Richtung und in Umfangsrichtung) auftreten, erhält der Reifen seine ausgezeichneten Eigenschaften, wie insbesondere nahezu ideale Federungseigenschaften (Komfort), geringer Rollwiderstand und geringe Wärmeentwicklung.

Der Reifen wird aus einem elastomeren Material gefertigt. Aufgrund der durch den im Reifenhohlraum herrschenden Unterdruck auftretenden Druckspannungen ist neben den herkömmlichen Herstellungsverfahren ein Herstellen durch Spritzgießen, insbesondere unter Verwendung von "liquid rubber" besonders geeignet. Auch ein faserverstärktes Elastomer kann hiebei verwendet werden. Hiebei können die Fasern im Elastomer in eine bestimmte Richtung, beispielsweise im Laufflächenbereich in Umfangsrichtung, orientiert sein. Hiezu wird auf das in der AT-PS 316.336 beschriebene Verfahren zur Herstellung eines Reifenkörpers hingewiesen.

- 9 -

0173670

Patentansprüche:

1. Fahrzeugluftreifen aus einem im wesentlichen inkompressiblen, elastomeren Material, in dessen Innenraum ein gegenüber dem umgebenden Luftdruck geringerer Innendruck erstellbar ist, dadurch gekennzeichnet, daß der Reifen (4 - $4^{IV}$, 15) als Rohreifen gemäß einer dem Betrieb mit Unterdruck entsprechenden Gleichgewichtsgestalt geformt ist, sodaß bei Betrieb mit Unterdruck in den Hauptspannungsrichtungen (in radialer Richtung und in Umfangsrichtung) im wesentlichen nur Druckspannungen auftreten.

2. Reifen nach Anspruch 1, dadurch gekennzeichnet, daß der Laufflächenteil mit zumindest einer in Umfangsrichtung knickfesten und in radialer Richtung biegeweichen Verstärkungslage (10, 11) versehen ist.

3. Reifen nach Anspruch 2, dadurch gekennzeichnet, daß die Verstärkungslage zumindest eine Lage von in Umfangsrichtung verlaufenden drucksteifen, gegebenenfalls spiralig gewickelten Drähten (10) aufweist, welche vorzugsweise die oberste(n) Lage(n) der Verstärkungslage bilden.

4. Reifen nach Anspruch 2, dadurch gekennzeichnet, daß die Verstärkungslage zumindest eine zellförmig, insbesondere wabenförmig strukturierte Lage (11) aufweist, welche aus offenen Zellen bzw. Waben, beispielsweise aus Kunststoff oder Metall, besteht und die gegebenenfalls beidseitig mit einer Lage aus Elastomer abgedeckt ist.

5. Reifen nach einem der Ansprüche 1 bis 4, dadurch gekennzeichnet, daß die Reifenseitenwände (7 - 7''') nach innen gekrümmt sind und daß, im Querschnitt betrachtet, jede Seitenwand (7 - 7''') entlang einer Kurve mit einer oder zwei Wendetangenten verläuft.

0173670

6. Reifen nach einem der Ansprüche 1 bis 4, dadurch gekennzeichnet, daß die Reifenseitenwände ($7^{IV}$) nach innen gekrümmt sind, wobei im Querschnitt betrachtet, jede Seitenwand entlang einer wendetangentenfreien Kurve verläuft.

7. Reifen nach einem der Ansprüche 1 bis 4, dadurch gekennzeichnet, daß er, im Querschnitt betrachtet, elliptisch bzw. im wesentlichen elliptisch gestaltet ist, wobei eine der beiden Seitenwände mit Wulstbereichen (14) zum Anordnen des Reifens auf einer Felge versehen ist.

8. Reifen nach einem der Ansprüche 1 bis 7, dadurch gekennzeichnet, daß er aus einem gießbaren elastomeren Material ("liquid rubber") in einem Gußverfahren hergestellt ist.

9. Reifen nach einem der Ansprüche 1 bis 8, dadurch gekennzeichnet, daß in das elastomere Material gegebenenfalls orientierte Fasern als Verstärkungselemente eingebettet sind.

**Fig.1**

6  0173670

5

6

7

4

9  8

3

2  1

**Fig.2**

6

10

0173670

# Fig.3

6'

11

# Fig.4

4'

7'

12

9'

8

2'

1'

0173670

## Fig.5

## Fig.6

0173670

**Fig.7**

**Fig.8**